# EUROPÄISCHE PATENTSCHRIFT

(11) **EP 0 882 608 B1**
(45) Veröffentlichungstag und Bekanntmachung des Hinweises auf die Patenterteilung: **15.09.2004**
(21) Anmeldenummer: 98100675.2
(22) Anmeldetag: 16.01.1998
(51) Int. Cl.: B60H 3/06, B01D 46/10

(54) **Filter**
Filter
Filtre

(30) Priorität: 04.06.1997 DE 29709719 U
(43) Veröffentlichungstag der Anmeldung: 09.12.1998
(73) Patentinhaber: Behr GmbH & Co., 70469 Stuttgart (DE)
(72) Erfinder: Rinckleb, Tilo, Dipl.-Ing., 74177 Bad Friedrichshall (DE); Schlinke, Gunnar, Dipl.-Ing., 70469 Stuttgart (DE)

(56) Entgegenhaltungen:
- EP-A- 0 211 177
- EP-A- 0 370 222
- WO-A-97/35656
- DE-A- 2 916 391
- DE-A- 3 514 038
- DE-A- 3 902 546
- DE-U- 29 503 566
- US-A- 3 801 405
- US-A- 5 676 894
- PATENT ABSTRACTS OF JAPAN vol. 18, no. 525 (C-1257), 5.Oktober 1994 & JP 06 182129 A (MITSUBISHI ELECTRIC CORP), 5.Oktober 1994,

## Beschreibung

Die Erfindung betrifft eine Heizungs- oder Klimaanlage mit einem Filter für ein Kraftfahrzeug gemäß dem Oberbegriff des Anspruchs 1.

Die EP 0 370 222 A2 beschreibt einen Filter für eine Klimaanlage für ein Kraftfahrzeug, der von einem Rahmen umgeben ist, wobei zwischen dem Filterkörper und dem Rahmen eine Verbindung aufgrund eines bis zu einer vorgegebenen Tiefe in den Rand des Filterkörpers eingedrungenen ausgehärteten Materials besteht.

Aus der DE 295 03 566 U1 ist ein gattungsgemäßes Filter bekannt, mit einem aus mehreren Filterlagen bestehenden Filterkörper und einem den Filterkörper umfassenden Rahmen, der aus einem textilen Material besteht und mit dem Filterkörper über einen aushärtenden Kleber verklebt ist, wobei der Kleber in das Filter teilweise eindringt. Trotz seiner Einfachheit ist dieses Filter immer noch aufwendig herzustellen, da ein textiles Material zunächst mit einem geeigneten Kleber versehen werden muß, um dann das Material zur Bildung des Rahmens auf den Rand des Filterkörpers aufzukleben.

Ausgehend von diesem Stand der Technik ist es Aufgabe der Erfindung, eine Heizungs- oder Klimaanlage mit einem verbesserten Filter für ein Kraftfahrzeug bereitzustellen, wobei der Filter insbesondere einfach aufgebaut ist und daher kostengünstig herstellbar ist.

Wenn erfindungsgemäß der Rahmen aus einem schrumpffähigen Material besteht und auf einen Rand des Filterkörpers aufgeschrumpft ist, ist ein einfach herstellbares und damit kostengünstiges Filter erhalten, denn zum Aufbringen des Rahmens auf das Filter müssen der Filterkörper und das den Rahmen bildende schrumpffähige Material lediglich zusammengefügt und kurzzeitig erwärmt werden, so daß das schrumpffähige Material den Filterkörper dann eng und formschlüssig umschließt.

Ein weiterer Vorteil des erfindungsgemäßen Filters ist, daß der Filterkörper eine beliebige Form aufweisen kann, und dennoch in einfacher Weise mit einem Rahmen ausgestattet werden kann, denn der Rahmen aus schrumpffähigem Material kann sich beim Aufschrumpfen jeder beliebigen Form des Filterkörpers anpassen. Es können daher die verschiedensten Formen eines Filterkörpers in einfachster Weise mit demselben Herstellungsverfahren kostengünstig mit einem Rahmen versehen werden.

Schrumpffähiges Material ist im Handel beispielsweise in Form eines Schrumpfschlauches erhältlich, so daß in einfacher und vorteilhafter Weise der Rahmen ein Abschnitt des Schrumpfschlauches bilden kann, so daß bei der Herstellung des erfindungsgemäßen Filters lediglich der Filterkörper in den Schrumpfschlauchabschnitt eingelegt und der Schrumpfschlauchabschnitt auf den Filterkörper aufgeschrumpft werden muß.

Der Filterkörper kann aus mehreren Filterlagen bestehen, die über den Schrumpfschlauch, bzw. das schrumpffähige Material zusammengehalten werden, wobei der Schrumpfschlauch den Rand des Filterkörpers ein wenig übergreift, wodurch zum einen der Rahmen einen festen Sitz erhält und zum anderen ein Zusammenhalt der Filterlagen bewirkt wird.

Zur besseren Aussteifung des Filters kann der Filterkörper mit Versteifungselementen versehen werden. Dann braucht der Rahmen keine Versteifungsfunktion übernehmen und kann gegebenenfalls relativ dünn ausgelegt sein.

In einer Ausgestaltung der Erfindung kann ein Teil des Rahmens während des Aufschrumpfens in nicht geschrumpftem Zustand verbleiben, wodurch der nicht geschrumpfte Teil des Rahmens nicht formschlüssig an dem Filterkörper anliegt und so eine Handhabe bildet.

In einer weiteren Ausgestaltung kann die Handhabe auch gebidet sein durch eine in den Rahmen integrierte Grifflasche.

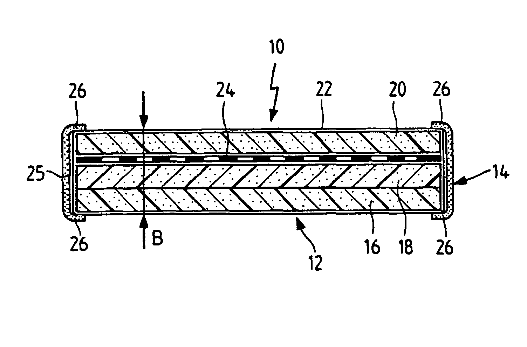

Im folgenden wird die Erfindung anhand eines Ausführungsbeispiels unter Bezugnahme auf die Zeichnung im einzelnen erläutert.

Die einzige Figur der Zeichnung zeigt ein erfindungsgemäßes Filter 10 für eine Heizungs- oder Klimaanlage eines Kraftfahrzeuges. Das Filter 10 weist einen Filterkörper 12 und einen den Filterkörper 12 wenigstens teilweise umfassenden Rahmen 14 auf. Der Filterkörper 12 besteht bevorzugt aus mehreren Filterlagen 16, 18 und 20, die flächig aneinanderliegen. Die Filterlagen 16, 18 und 20 sind luftdurchlässig ausgebildet und können beispielsweise aus einem porösen Polyurethanschaum oder dergleichen gebildet sein. Zur Adsorption von Verunreinigungen der Luft können in den Filterlagen 16, 18 und 20 Adsorberpartikel, beispielsweise Aktivkohlegranulat, eingelagert sein. Damit von den Lagen 16 bis 20 losgelöste Adsorberpartikel den Filterkörper 12 nicht verlassen können, weist der Filterkörper 12 eine Umhüllung 22 aus beispielsweise strumpfartigem Material auf. Die Maschenweite dieses strumpfartigen Materials sollte kleiner als die Korngröße der Adsorberartikel sein.

Bevorzugt kann der Filterkörper 12 Verstärkungselemente, beispielsweise ein Lochblech 24 aufweisen, das vorteilhafterweise zwischen zwei Filterlagen 18 und 20 angeordnet ist.

Der Rahmen 14 des Filters 10 besteht erfindungsgemäß aus einem schrumpffähigen Material, das auf einen Umfangsrand des Filterkörpers 12 aufgeschrumpft ist. In einer bevorzugten Ausgestaltung der Erfindung ist der Rahmen 14 durch einen Abschnitt 25 eines Schrumpfschlauches gebildet, der den Filterkörper 12 umfangsmäßig vollständig umrahmt. Die Länge des Schrumpfschlauchabschnitts 25 ist vor dem Aufschrumpfen geringfügig größer als die Breite B des Filterkörpers 12, so daß nach dem Aufschrumpfen der Rand des Filterkörpers 12 von dem aufgeschrumpften Material übergriffen ist, wie in der Zeichnung bei 26 angedeutet. Der Rahmen 14 ist dann formschlüssig mit dem Filterkörper 12 verbunden. Auf den Rahmen 14 kann eine entlang des Randes umlaufende Dichtung, beispielsweise eine Schaumgummidichtung oder eine Dichtung aus einem geeigneten Kunststoff, aufgebracht werden.

In einem nicht dargestellten Ausführungsbeispiel verbleibt ein Teil des Rahmens während des Aufschrumpfens in nicht geschrumpftem Zustand, so daß dieser Teil des Rahmens eine Handhabe bilden kann, an der das Filter 10 aus einem Filterschacht herausgezogen werden kann.

In einer weiteren - ebenfalls nicht dargestellten - Ausführungsform der Erfindung ist in den Rahmen aus schrumpffähigem Material eine Grifflasche integriert.

## Patentansprüche

1. Heizungs- oder Klimaanlage für ein Kraftfahrzeug mit einem Filter, der einen Filterkörper (12) und einen den Filterkörper (12) wenigstens teilweise umfassenden Rahmen (14) umfasst, **dadurch gekennzeichnet, dass** der Rahmen (14) aus einem schrumpffähigen Material besteht und auf einen Rand des Filterkörpers (12) aufgeschrumpft ist.

2. Heizungs- oder Klimaanlage nach Anspruch 1, **dadurch gekennzeichnet, dass** der Rahmen (14) ein Abschnitt (25) eines Schrumpfschlauch ist, der den Filterkörper (12) umfangsmäßig vollständig umrahmt.

3. Heizungs- oder Klimaanlage nach Anspruch 1 oder 2, **dadurch gekennzeichnet, dass** der Filterkörper (12) aus einer oder mehreren Filterlagen (16, 18, 20) gebildet ist.

4. Heizungs- oder Klimaanlage nach einem der Ansprüche 1 bis 3, **dadurch gekennzeichnet, dass** der Umfangsrand des Filterkörpers (12) von dem aufgeschrumpften Material übergriffen ist (26).

5. Heizungs- oder Klimaanlage nach einem der Ansprüch 1 bis 4, **dadurch gekennzeichnet, dass** der Filterkörper (12) wenigstens ein Versteifungselement (24) aufweist.

6. Heizungs- oder Klimaanlage nach einem der Ansprüche 1 bis 5, **dadurch gekennzeichnet, dass** ein Teil des Rahmens, während des Aufschrumpfen, in nicht geschrumpften Zustand verbleibt.

7. Heizungs- oder Klimaanlage nach einem der Ansprüche 1 bis 6, **dadurch gekennzeichnet, dass** in den Rahmen eine Grifflasche integriert ist.

## Claims

1. Heating or air conditioning system for a motor vehicle with a filter comprising a filter body (12) and a frame (14) at least partially surrounding the filter body (12), **characterised in that** the frame (14) is made of a shrinkable material and is shrunk onto an edge of the filter body (12).

2. Heating or air conditioning system according to claim 1, **characterised in that** the frame (14) is a section (25) of shrinkable tubing completely framing the circumference of the filter body (12).

3. Heating or air conditioning system according to claim 1 or 2, **characterised in that** the filter body (12) consists of one or more filter layers (16, 18, 20).

4. Heating or air conditioning system according to any of claims 1 to 3, **characterised in that** the peripheral edge of the filter body (12) is overlapped by the shrunk-on material (26).

5. Heating or air conditioning system according to any of claims 1 to 4, **characterised in that** the filter body (12) is provided with at least one reinforcing element (24).

6. Heating or air conditioning system according to any of claims 1 to 5, **characterised in that** part of the frame remains in the unshrunk state during the shrinking-on process.

7. Heating or air conditioning system according to any of claims 1 to 6, **characterised in that** a handling tab is integrated into the frame.

## Revendications

1. Installation de chauffage ou de climatisation pour un véhicule automobile avec un filtre comprenant un corps de filtre (12) et un cadre (14) entourant au moins partiellement le corps de filtre (12), **caractérisée en ce que** le cadre (14) se compose d'un matériau rétractable et est mis en place par rétractation sur un bord du corps de filtre (12).

2. Installation de chauffage ou de climatisation selon la revendication 1, **caractérisée en ce que** le cadre (14) est un tronçon (25) d'un tuyau rétractable qui entoure entièrement la périphérie du corps de filtre (12).

3. Installation de chauffage ou de climatisation selon la revendication 1 ou 2, **caractérisée en ce que** le corps de filtre (12) est formé d'une ou de plusieurs couches filtrantes (16, 18, 20).

4. Installation de chauffage ou de climatisation selon l'une quelconque des revendications 1 à 3, **caractérisée en ce que** le bord périphérique du corps de filtre (12) est recouvert par le matériau mis en place par rétractation (26).

5. Installation de chauffage ou de climatisation selon l'une quelconque des revendications 1 à 4, **caractérisée en ce que** le corps de filtre (12) comprend au moins un élément de raidissement (24).

6. Installation de chauffage ou de climatisation selon l'une quelconque des revendications 1 à 5, **caractérisée en ce qu'**une partie du cadre reste en état de non rétractation lors de la mise en place par rétractation.

7. Installation de chauffage ou de climatisation selon l'une quelconque des revendications 1 à 6, **caractérisée en ce qu'**un barre de préhension est intégrée dans le cadre.
